# EUROPÄISCHE PATENTSCHRIFT

(11) **EP 2 445 919 B1**
(45) Veröffentlichungstag und Bekanntmachung des Hinweises auf die Patenterteilung: **21.08.2013**
(21) Anmeldenummer: 10725194.4
(22) Anmeldetag: 21.06.2010
(51) Int. Cl.: C07F 7/20

(54) **VERFAHREN ZUR HERSTELLUNG VON ORGANOALKOXYHYDROGENSILANEN**
METHOD FOR PRODUCING ORGANOALKOXY HYDROGEN SILANES
PROCÉDÉ DE FABRICATION D'ORGANOALCOXYHYDROGÉNOSILANES

(30) Priorität: 26.06.2009 DE 102009027257
(43) Veröffentlichungstag der Anmeldung: 02.05.2012
(73) Patentinhaber: Wacker Chemie AG, 81737 München (DE)
(72) Erfinder: KNIES, Wolfgang, 84489 Burghausen (DE); BÖGERSHAUSEN, Karin, 84489 Burghausen (DE)
(74) Vertreter: Gössmann, Christoph Tassilo
(86) Internationale Anmeldenummer: PCT/EP2010/058694
(87) Internationale Veröffentlichungsnummer: WO 2010/149603

(56) Entgegenhaltungen:
- WO-A1-2008/087072
- DE-A1- 1 964 553
- US-A1- 2001 044 551
- US-A1- 2005 054 211

## Beschreibung

Die Erfindung betrifft ein Verfahren zur Herstellung von Organoalkoxyhydrogensilanen, sowie Organohalogenhydrogensilanen

Im Handel sind Organohalogenhydrogensilanen die mit Bor verunreinigt sind, das oft bei Produkten, die daraus hergestellt werden, wie vorzugsweise Elektronikbauteile, störend ist.

Bekannt ist ein Verfahren zur Reinigung von Alkoxysilanen (EP 223210, 13.11.1986, Toray), bei dem ein Alkoxysilan in Gegenwart eines Reinigungsmittels (acid clay or metal halide) aufgeheizt und mit einem Neutralisationsmittel behandelt und das Alkylalkoxysilan von Neutralisationsbeiprodukten und überschüssigem Neutralisationsmittel abgetrennt wird (Chlorreduzierung).

Dokument US 2001/044551 offenbart die Herstellung von Methylidalkoxysilanen der Formel (I) (Absatz 13, Anspruch 2) aus den entsprechenden Hydridodichlorosilanen und Alkoholen (Absatz 17). Davon unterscheidet sich das Verfahren der vorliegenden Erfindung in der Tatsache, daß das Edukt Organohalogenhydrogensilan in einem vorangeschalteten Schritt einer Reinigungprozedur unterworfen worden ist.

Aufgabe der Erfindung ist es, den Stand der Technik zu verbessern und insbesondere Organoalkoxyhydrogensilane bereitzustellen, die möglichst wenig Bor enthalten.

Gegenstand der Erfindung ist ein Verfahren zur Herstellung von Organoalkoxyhydrogensilanen mit einem Borgehalt unter 100 ppb der Formel

R¹ₓH_{y}Si(OR²)_{z}

wobei x+y+z =4
und x, y, z größer gleich 1, wobei in einem ersten Schritt ein mit Bor verunreinigtes Organohalogenhydrogensilan der Formel
R¹ₓH_{y}SiHal_{z}
wobei x+y+z =4,
x, y, z größer gleich 1 und
R¹ lineare oder verzweigte Alkyl-, Cycloalkyl-, Aryl-, Alkenyl- oder Arylalkylreste mit 1 bis 12 Kohlenstoffatomen sind und Hal F, Cl, Br oder J einer Behandlung mit Kieselsäure oder Alumosilikat unterworfen wird und die Kieselsäure oder das Alumosilikat in einem zweiten Schritt anschließend von dem Organohalogenhydrogensilan abgetrennt wird und dann das gereinigte Organohalogenhydrogensilan mit Alkohol R² -OH umgesetzt wird, wobei R² Methyl-, Ethyl-, n-Propyl-, iso-Propyl-, n-Butyl-, iso-Butyl-, tert.-Butyl-, n-Pentyl-, iso-Pentyl-, neo-Pentyl- oder tert.-Pentylrest und bedeutet.

Bei R¹ handelt es sich vorzugsweise um lineare oder verzweigte Alkyl-, Cycloalkyl-, Aryl-, Alkenyl- oder Arylalkylreste, bevorzugt Alkylreste. Bevorzugt weisen die Reste R¹ 1 bis 12, insbesondere 1 bis 6 Kohlenstoffatome auf. Besonders bevorzugte Reste R¹ sind Methyl-, Ethyl-, n-Propyl-, iso-Propyl-, n-Butyl-, iso-Butyl-, tert.-Butyl-, n-Pentyl-, iso-Pentyl-, neo-Pentyl-oder tert.-Pentylrest und Phenylrest.

Von den Organoalkoxyhydrogensilanen sind Alkylalkoxyhydrogensilane bevorzugt und von den Alkylalkoxyhydrogensilanen sind das Dimethoxymethylsilan und das Diethoxymethylsilan bevorzugt, besonders bevorzugt ist das Diethoxymethylsilan. Von den Organohalogenhydrogensilanen sind Alkylhalogenhydrogensilane bevorzugt und von den Alkylhalogenhydrogensilanen sind das Dimethylchlorsilan und das Dichlormethylsilan bevorzugt, besonders bevorzugt ist das Dichlormethylsilan.

Von den Alkoholen R² -OH sind solche bevorzugt, bei denen R² Methyl-, Ethyl-, n-Propyl-, iso-Propyl-, n-Butyl-, iso-Butyl-, tert.-Butyl-, n-Pentyl-, iso-Pentyl-, neo-Pentyl- oder tert.-Pentylrest und Phenylrest ist, besonders bevorzugt sind solche mit dem Methyl-, Ethyl-, Buthyl-, n-Propyl-, iso-Propylrest.

Die untere Menge des Alkohols ergibt sich aus der Stöchiometrie, d.h. 2 mol Alkohol je mol Organohalogenhydrogensilan. Bevorzugt ist ein 50% molarer Überschuss, besonders bevorzugt ist ein 30% molarer Überschuss.

Vorzugsweise können gegebenenfalls neben dem Alkohol Lösungsmittel wie vorzugsweise aliphatische Lösungsmittel, wie Isohexan, Pentan, Oktan, Dekan, aromatische Lösungsmittel wie Toluol, Xylol eingesetzt werden, bevorzugt werden Isohexan, Pentan und Dekan, besonders bevorzugt Isohexan beim erfindungsgemäßen Verfahren eingesetzt.

Bevorzugt sind gleiche molare Mengen von Lösungsmittel zu Organohalogenhydrogensilan, besonders bevorzugt zwischen 0,6 und 1 mol Lösungsmittel je mol Organohalogenhydrogensilan.

Besonders bevorzugt sind unpolare Lösungsmittel, um die Löslichkeit von Hydrochloriden herabzusetzen.

Vorzugsweise können gegebenenfalls Säurefänger wie vorzugsweise Amine, wie Ethylendiamin, Isoproylamin, Triisopropylamin Harnstoff eingesetzt werden, bevorzugt ist Harnstoff.

Die Untergrenze für den Säurefänger ist je Äquivalent Organohalogenhydrogensilan ein Äquivalent Säurefänger, bevorzugt sind 30 % molarer Überschuss, besonders bevorzugt sind 5 bis 10% molarer Überschuss.

Bei dem erfindungsgemäßen Verfahren werden gegebenenfalls Lösungsmittel, Alkohol und gegebenenfalls Säurefänger in einem Kolben mit Rührer, Rückflusskühler und Zutropftrichter vorgelegt, über den Zutropftrichter wird Organohalogenhydrogensilan rein oder in Lösung zugetropft. Nach beendeter Zugabe wird einige Stunden nachreagiert, die untere Phase abgetrennt, die verworfen wird, die obere Phase wird gegebenenfalls mit Metallhydrogencarbonat neutralisiert, filtriert, das Lösungsmittel wird gegebenenfalls abgezogen und das Organoalkoxyhydrogensilan gegebenenfalls fraktioniert destilliert.

Das Organohalogenhydrogensilan wird, bevor es eingesetzt wird, dem erfindungsgemäßen Reinigungsschritt unterworfen. Dabei wird das Organohalogenhydrogensilan mit Alumosilicat, vorzugsweise Perlite, vorzugsweise 0,1 bis 50 Gew.%, bevorzugt 1 bis 20 Gew.%, besonders bevorzugt 5 bis 15 Gew.% bezogen auf das Organohalogenhydrogensilan, für vorzugsweise 1 Std. bis 20 Std., vorzugsweise unter Stickstoff, vorzugsweise bei 25°C bis zum Siedepunkt des Organohalogenhydrogensilan und Normaldruck (1,01325 bar) unter Rühren behandelt und anschließend wird eine Filtration oder ein Übertreiben (vorzugsweise kein Rücklauf, vorzugsweise Normaldruck (1,01325 bar), vorzugsweise bei einer Kopftemperatur entsprechend dem Siedepunkt des Organohalogenhydrogensilans vorgenommen.

Bei einem weiteren bevorzugten Reinigungsschritt wird das Organohalogenhydrogensilan mit Kieselsäure, bevorzugt gefällte Kieselsäure vorzugsweise 0,1 bis 50 Gew.%, bevorzugt 1 bis 20 Gew.%, besonders bevorzugt 5 bis 15 Gew.% bezogen auf das Organohalogenhydrogensilan für vorzugsweise 1 Std. bis 20 Std., vorzugsweise unter Stickstoff, vorzugsweise bei 25°C bis zum Siedepunkt des Organohalogenhydrogensilans und Normaldruck (1,01325 bar) unter Rühren behandelt und anschließend wird eine Filtration vorgenommen.

Als Reinigungsschritt wird Organohalogenhydrogensilan besonders bevorzugt durch Behandlung mit Alumosilikat und anschließender einfacher Destillation gereinigt.

Als Obergrenze ist ein Borgehalt von vorzugsweise unter 100 ppb (1 ppb = 10⁻⁹ = 0,000000001 bedeutet), in einer Gewichtungsreihe von bevorzugt zu bevorzugter gehend ein Borgehalt von unter 90 ppb, 80 ppb, 70 ppb, 60 ppb, 50 ppb, 40 ppb, 30 ppb, 20 ppb, 10 ppb, 5 ppb, 1 ppb, 0,1 ppb, besonders bevorzugt unter 0,01 ppb Bor gegeben. Des Weiteren ist als Untergrenze ein Borgehalt in einer Gewichtungsreihe von bevorzugter zu weniger bevorzugt gehend von mehr wie 0,01 ppb, 0,1 ppb, 1,0 ppb, 5 ppb, 10 ppb, 20 ppb, 30 ppb, 40 ppb, 50 ppb, 60 ppb, 70 ppb, 80 ppb, 90 ppb, vorzugsweise unter 100 ppb gegeben.

### Mengenverhältnisse Kieselsäure bzw. Alumosilikat zu Organohalogenhydrogensilan:

Vorzugsweise 0,1 bis 50 Gew.% bezogen auf eingesetztes Organohalogenhydrogensilan, bevorzugt 1 bis 20 Gew.%, besonders bevorzugt zwischen 5 bis 15 Gew.%.

### Temperatur der Behandlung:

Vorzugsweise -80°C bis + 100°C, bevorzugt über 0°C, besonders bevorzugt + 15 bis +45°C
Obergrenze ist der Siedepunkt des Organohalogenhydrogensilans bei Normaldruck (1,01325 bar).

### Druck bei Behandlung

Normaldruck (1,01325 bar) bis 3 bar, bevorzugt Normaldruck (1, 01325 bar)

### Druck bei Destillation

0,1 mbar bis Normaldruck (1,01325 bar), bevorzugt Normaldruck (1, 01325 bar)

Ein weiterer Gegenstand der Erfindung ist ein Organoalkoxyhydrogensilan der Formel R1ₓH_{y}SiOR²_{z}
wobei x+y+z =4,
x, y, z größer gleich 1 und
R¹ lineare oder verzweigte Alkyl-, Cycloalkyl-, Aryl-, Alkenyl- oder Arylalkylreste mit 1 bis 12 Kohlenstoffatomen sind und R² Methyl-, Ethyl-, n-Propyl-, iso-Propyl-, n-Butyl-, iso-Butyl-, tert.-Butyl-, n-Pentyl-, iso-Pentyl-, neo-Pentyl- oder tert.-Pentylrest und Phenylrest bedeutet, dadurch gekennzeichnet, dass es einen Borgehalt von unter 100 ppb aufweist.

Bevorzugt von den Alkylalkoxyhydrogensilane sind das Dimethoxymethylsilan und das Diethoxymethylsilan, besonders bevorzugt ist das Diethoxymethylsilan.

Ein weiterer Gegenstand der Erfindung ist ein Organohalogenhydrogensilan der Formel

R¹ₓH_{y}SiHal_{z}

wobei x+y+z =4,
x, y, z größer gleich 1 und
R¹ lineare oder verzweigte Alkyl-, Cycloalkyl-, Aryl-, Alkenyl- oder Arylalkylreste mit 1 bis 12 Kohlenstoffatomen sind und Hal F, Cl, Br oder J ist, dadurch gekennzeichnet, dass es einen Borgehalt von unter 100 ppb aufweist.

Bevorzugt von den Alkylhalogenhydrogensilan sind das Dimethylchlorsilan und das Dichlormethylsilan, besonders bevorzugt ist das Dichlormethylsilan.

Alle vorstehenden Symbole der vorstehenden Formeln weisen ihre Bedeutungen jeweils unabhängig voneinander auf. In allen Formeln ist das Siliciumatom vierwertig.

Im Rahmen der vorliegenden Erfindung sind, falls jeweils nicht anders angegeben, alle Mengen- und Prozentangaben auf das Gewicht bezogen, alle Temperaturen 20°C und alle Drücke 1,013 bar (abs.). Alle Viskositäten werden bei 25°C bestimmt.

### Beispiele

### Allgemeine Synthesevorschrift

Bei dem Verfahren werden gegebenenfalls Lösungsmittel, Alkohol und gegebenenfalls Säurefänger in einem Kolben mit Rührer, Rückflusskühler und Zutropftrichter vorgelegt, über den Zutropftrichter wird Organohalogenhydrogensilan rein oder in Lösung zugetropft. Nach beendeter Zugabe wird einige Stunden nachreagiert, die untere Phase abgetrennt, die verworfen wird, die obere Phase wird gegebenenfalls mit Metallhydrogencarbonat neutralisiert, filtriert, das Lösungsmittel wird abgezogen und das Organoalkoxyhydrogensilan gegebenenfalls fraktioniert destilliert.

In den Beispielen ist Alkylalkoxyhydrogensilan = Diethoxymethylsilan und Alkylhalogenhydrogensilan = Dichlormethylsilan, Lösemittel = Isohexan, Alkohol = Ethanol, Säurefänger = Harnstoff.

### Standardrezeptur

Alle Beispiele werden bei Raumtemperatur 25°C, Normaldruck (1,01325 bar) durchgeführt.

### (Beispiel für Rezeptur

| | | [g] bzw. | [mL bei Isohexan] (%) | (mol) |
|---|---|---|---|---|
| 1 | Dichlormethylsilan | 330,0 | 34,0 | 2,87 |
| 2 | EtOH | 318,0 | 33,0 | 6,90 |
| 3 | Isohexan | 350,0 | | 2,68 |
| 4 | Harnstoff | 310,0 | 32,0 | 5,17 |

### Reinigung des Dichlormethylsilan

Der Gehalt an Bor im Dichlormethylsilan, das als Ausgangsprodukt verwendet wird, beträgt 890 ppb.

### Beispiel 1

### Reinigen des Methylhydrogendichlorsilans durch Behandlung mit Alumosilikat oder Kieselsäure

- Der Gehalt an Bor im Methylhydrogendichlorsilan beträgt wie oben 950 ppb.

Behandlung von Methylhydrogendichlorsilan mit x Gew.% Alumosilicat (20 Std., Stickstoff, Raumtemperatur 25°C, Normaldruck (1, 01325 bar), Rühren und anschließendes

Übertreiben (kein Rücklauf, Normaldruck (1,01325 bar), Kopftemperatur ca. 40°C)
Ausgangswert s.o.
x Gew.% Alumosilicat:

| | |
|---|---|
| 0,7 % | 90 ppb Bor |
| 2,2% | 60 ppb Bor |
| 5,3% | 30 ppb Bor |

-Behandlung von Methylhydrogendichlorsilan mit x Gew.% gefällter Kieselsäure (20 Std., Stickstoff, Raumtemperatur, Normaldruck (1,01325 bar), Rühren), nur filtriert (keine Destillation!)
Ausgangswert s.o.
x Gew.% gefällter Kieselsäure:

| | |
|---|---|
| 5 % | 130 ppb Bor |
| 10% | 81 ppb Bor |

### Beispiel 2

### Verwenden des durch Behandeln mit gefällter Kieselsäure gereinigten Methylhydrogendichlorsilans zur Herstellung eines Methylhydrogendiethoxysilans

### Reinigen des Methylhydrogendichlorsilans

Das Dichlormethylsilan war mit 10 Gew.% gefällter Kieselsäure, bezogen auf das Dichlormethylsilan, vorbehandelt worden und destilliert worden.

Herstellung von Diethoxymethylsilan

In einem Kolben mit Rührer, Rückflusskühler und Zutropftrichter wurden 318 g Ethanol, 310 g Harnstoff und 350 ml Isohexan vorgelegt, über den Zutropftrichter wurden bei Raumtemperatur (= 25°C) 330 g Dichlormethylsilan, das zuvor wie oben aufgeführt mit 10 Gew.% gefällter Kieselsäure, bezogen auf das Dichlormethylsilan, vorbehandelt und filtriert worden war, zugetropft. Die Zutropfgeschwindigkeit wurde so gewählt, dass die Temperatur von 30°C nicht überschritten wurde. Nach beendeter Zugabe wurde 3 Stunden bei 60°C nachreagiert. Die untere Phase wurde abgetrennt und verworfen, die obere Phase wurde bei Raumtemperatur mit soviel Natriumhydrogencarbonat versetzt, bis ein pH-Wert von 7 erreicht wurde. Die Lösung wurde anschließend filtriert, das Lösungsmittel und überschüssiger Ethanol über eine Kolonne mit 10 Böden abgezogen und das Diethoxymethylsilan bei einem Rücklaufverhältnis von 1 zu 3 fraktioniert destilliert.

Das erhaltene Diethoxymethylsilan wies einen Borgehalt von 50 ppb Bor auf.

## Patentansprüche

1. Verfahren zur Herstellung von Organoalkoxyhydrogensilanen mit einem Borgehalt unter 100 ppb der Formel
R¹ₓH_{y}Si(OR²)_{z}
wobei x+y+z =4
und x, y, z größer gleich 1,
wobei in einem ersten Schritt ein mit Bor verunreinigtes Organohalogenhydrogensilan der Formel
R¹ₓH_{y}SiHal_{z}
wobei x+y+z =4,
x, y, z größer gleich 1 und
R¹ lineare oder verzweigte Alkyl-, Cycloalkyl-, Aryl-, Alkenyl- oder Arylalkylreste mit 1 bis 12 Kohlenstoffatomen sind und Hal F, Cl, Br oder J ist, einer Behandlung mit Kieselsäure oder Alumosilikat unterworfen wird und die Kieselsäure oder das Alumosilikat in einem zweiten Schritt anschließend von dem Organohalogenhydrogensilan abgetrennt wird und dann das gereinigte Organohalogenhydrogensilan mit Alkohol R² -OH umgesetzt wird, wobei R² Methyl-, Ethyl-, n-Propyl-, iso-Propyl-, n-Butyl-, iso-Butyl-, tert.-Butyl-, n-Pentyl-, iso-Pentyl-, neo-Pentyl- oder tert.-Pentylrest bedeutet.

2. Verfahren zur Herstellung von Organoalkoxyhydrogensilanen nach Anspruch 1, **dadurch gekennzeichnet, dass** die Abtrennung der Kieselsäure oder des Alumosilikats von dem Organohalogenhydrogensilan durch Filtration erfolgt.

3. Verfahren zur Herstellung von Organoalkoxyhydrogensilanen nach Anspruch 1, **dadurch gekennzeichnet, dass** die Abtrennung der Kieselsäure oder des Alumosilikats von dem Organohalogenhydrogensilan durch Destillation erfolgt.

4. Verfahren zur Herstellung von Organoalkoxyhydrogensilanen nach einem oder mehreren der Ansprüche 1 bis 3, **dadurch gekennzeichnet, dass** bei der Umsetzung noch zusätzlich zumindest neben dem Alkohol ein Lösungsmittel vorhanden ist.

5. Verfahren zur Herstellung von Organoalkoxyhydrogensilanen nach einem oder mehreren der Ansprüche 1 bis 4, **dadurch gekennzeichnet, dass** bei der Umsetzung noch zusätzlich zumindest ein Säurefänger vorhanden ist.

6. Verfahren zur Herstellung von Organoalkoxyhydrogensilanen nach Anspruch 4, **dadurch gekennzeichnet, dass** das Lösungsmittel Isohexan ist.

7. Verfahren zur Herstellung von Organoalkoxyhydrogensilanen nach Anspruch 5, **dadurch gekennzeichnet, dass** der Säurefänger Harnstoff ist.

## Claims

1. Process for preparing organoalkoxyhydrosilanes with a boron content less than 100 ppb and of the formula
R¹xH_{y}Si (OR²)z
where x+y+z = 4
and x, y, z are greater than or equal to 1,
wherein, in a first step, a boron-contaminated organohalohydrosilane of the formula
R¹ₓH_{y}SiHal_{z}
where x+y+z = 4,
x, y, z are greater than or equal to 1, and
R¹ are linear or branched alkyl, cycloalkyl, aryl, alkenyl or arylalkyl radicals having 1 to 12 carbon atoms and Hal is F, Cl, Br or I, is subjected to a treatment with silica or aluminosilicate and the silica or the aluminosilicate is subsequently removed from the organohalohydrosilane in a second step and then the purified organohalohydrosilane is reacted with alcohol R²-OH where R² is a methyl, ethyl, n-propyl, isopropyl, n-butyl, isobutyl, tert-butyl, n-pentyl, isopentyl, neopentyl or tert-pentyl radical.

2. Process for preparing organoalkoxyhydrosilanes according to Claim 1, **characterized in that** the silica or the aluminosilicate is removed from the organohalohydrosilane by filtration.

3. Process for preparing organoalkoxyhydrosilanes according to Claim 1, **characterized in that** the silica or the aluminosilicate is removed from the organohalohydrosilane by distillation.

4. Process for preparing organoalkoxyhydrosilanes according to one or more of Claims 1 to 3, **characterized in that** at least one solvent is additionally present as well as the alcohol in the course of reaction.

5. Process for preparing organoalkoxyhydrosilanes according to one or more of Claims 1 to 4, **characterized in that** at least one acid scavenger is additionally present in the course of reaction.

6. Process for preparing organoalkoxyhydrosilanes according to Claim 4, **characterized in that** the solvent is isohexane.

7. Process for preparing organoalkoxyhydrosilanes according to Claim 5, **characterized in that** the acid scavenger is urea.

## Revendications

1. Procédé pour la préparation d'organoalcoxyhydrogénosilanes présentant une teneur en bore inférieure à 100 ppb de formule
R¹ₓH_{y}Si(OR²)_{z}
où x + y + z = 4 et x, y, z sont supérieurs ou égaux à 1,
où, dans une première étape, un organohalogénohydrogénosilane contaminé par du bore de formule
R¹ₓH_{y}SiHal_{z}
où x + y + z = 4 et x, y, z sont supérieurs ou égaux à 1 et
R¹ représente des radicaux alkyle, cycloalkyle, aryle, alcényle ou arylalkyle linéaires ou ramifiés comprenant 1 à 12 atomes de carbone et Hal représente F, Cl, Br ou I, est soumis à un traitement avec de la silice ou un aluminosilicate et la silice ou l'aluminosilicate est ensuite, dans une deuxième étape, séparé de l'organohalogénohydrogénosilane, puis l'organohalogénohydrogénosilane purifié est transformé avec un alcool R²-OH, R² signifiant un radical méthyle, éthyle, n-propyle, iso-propyle, n-butyle, iso-butyle, tert-butyle, n-pentyle, iso-pentyle, néopentyle ou tert-pentyle.

2. Procédé pour la préparation d'organoalcoxyhydrogénosilanes selon la revendication 1, **caractérisé en ce que** la séparation de la silice ou de l'aluminosilicate et de l'organohalogénohydrogénosilane s'effectue par filtration.

3. Procédé pour la préparation d'organoalcoxyhydrogénosilanes selon la revendication 1, **caractérisé en ce que** la séparation de la silice ou de l'aluminosilicate et de l'organohalogénohydrogénosilane s'effectue par distillation.

4. Procédé pour la préparation d'organoalcoxyhydrogénosilanes selon l'une ou plusieurs des revendications 1 à 3, **caractérisé en ce que** lors de la transformation, au moins un solvant est encore présent en plus, outre l'alcool.

5. Procédé pour la préparation d'organoalcoxyhydrogénosilanes selon l'une ou plusieurs des revendications 1 à 4, **caractérisé en ce que** lors de la transformation, au moins un piège d'acide est encore présent en plus.

6. Procédé pour la préparation d'organoalcoxyhydrogénosilanes selon la revendication 4, **caractérisé en ce que** le solvant est l'isohexane.

7. Procédé pour la préparation d'organoalcoxyhydrogénosilanes selon la revendication 5, **caractérisé en ce que** le piège d'acide est l'urée.
